# EUROPÄISCHE PATENTANMELDUNG

(11) **EP 2 581 131 A1**
(43) Veröffentlichungstag der Anmeldung: **17.04.2013**
(21) Anmeldenummer: 12187624.7
(22) Anmeldetag: 08.10.2012
(51) Int. Cl.: B01D 53/26, B60T 17/00, B01D 53/04

(54) **Lufttrocknungskartusche**

(30) Priorität: 10.10.2011 DE 102011054329
(71) Anmelder: Haldex Brake Products GmbH, 69123 Heidelberg (DE)
(72) Erfinder: Aumüller, Ralf, 60437 Frankfurt (DE)
(74) Vertreter: Rehberg Hüppe + Partner

(57) **Zusammenfassung**

Die Erfindung betrifft eine Lufttrocknungskartusche (2) für einen Lufttrockner (1) eines Nutzfahrzeugs.

Erfindungsgemäß ist in der Lufttrocknungskartusche (2) ein Abstützelement (44) für Federn (38a, 38b) zur Vorspannung des Trocknungsmittels (35) frei von außen zugänglich. Dies hat zur Folge, dass die Federn (38a, 38b) multifunktional genutzt werden können, da diese einerseits für die Vorspannung des Trocknungsmittels (35) zuständig sind und andererseits genutzt werden können, um die Lufttrocknungskartusche (2) zwischen einem Deckelelement (3) des Lufttrockners (1) und einem Sockelelement (4) des Lufttrockners (1) zu verspannen und zu fixieren. Die Erfindung schlägt auch vor, dass das Abstützelement (44) über ein Zugelement (47) gehalten ist, welches sich durch die Lufttrocknungskartusche (2) und das Trocknungsmittel (35) hindurch erstreckt und an einer Bodenwandung (20) der Lufttrocknungskartusche (2) befestigt ist. Auf diese Weise kann erreicht werden, dass Seitenwandungen (21) nicht mit Vorspannkräften infolge der Federn (38a, 38b) beaufschlagt werden.

## Beschreibung

### TECHNISCHES GEBIET DER ERFINDUNG

Die Erfindung betrifft eine Lufttrocknungskartusche für einen Lufttrockner eines Nutzfahrzeugs. Darüber hinaus betrifft die Erfindung einen Lufttrockner für eine Druckluftanlage eines Nutzfahrzeugs, welcher mit einer Lufttrocknungskartusche ausgestattet ist.

Lufttrocknungskartuschen dienen der Aufbereitung von Druckluft für Druckluftanlagen von Nutzfahrzeugen. Üblicherweise sind derartige Lufttrocknungskartuschen zwischen eine Druckluftquelle, insbesondere einen Kompressor, und mindestens einen Verbraucherkreis des Nutzfahrzeugs zwischengeschaltet. Die Lufttrocknungskartuschen dienen der Reinigung und Trocknung der Druckluft durch Einsatz mindestens eines Filters und/oder mindestens eines Trocknungsmittels, durch welche die Druckluft hindurchgeleitet wird. Derartige Lufttrocknungskartuschen finden Einsatz in einem Lufttrockner.

### STAND DER TECHNIK

DE 699 08 918 T2 offenbart einen Lufttrockner mit einer in einem Gehäuse des Lufttrockners aufgenommenen Lufttrocknungskartusche. Das Gehäuse ist mit zwei Gehäuseteilen ausgebildet, nämlich einem Sockelelement und einem in erster Näherung glockenartigen Deckelelement mit einer hohlzylinderförmigen Seitenwandung und einer kuppelartig gekrümmten Deckenwandung. Für mit dem Sockelelement montiertes Deckelelement begrenzt das derart gebildete Gehäuse einen Innenraum des Lufttrockners, welcher zylinderförmig mit Wölbung im Deckenbereich ausgebildet ist und in welchem die Lufttrocknungskartusche angeordnet ist. Die Lufttrocknungskartusche ist mit einem grundsätzlich geschlossenen, aber Durchtrittsöffnungen für den Druckluftstrom aufweisenden Gehäuse ausgebildet. Die Lufttrocknungskartusche liegt lose ohne zusätzliche Befestigungsmittel auf dem Sockelelement auf und ist mit minimalem radialen Spalt in der hohlzylinderförmigen Seitenwandung des Deckelelements aufgenommen. Ein ringförmiges Dichtelement, welches im radial außenliegenden Randbereich zwischen die Deckenwandung des Deckelelements des Lufttrockners und die Kartusche zwischengeordnet ist, besitzt ein derartiges Übermaß, dass mittels des Dichtelements die Kartusche zwischen Sockelelement und Deckelelement verspannt ist, wodurch eine Fixierung der Lufttrocknungskartusche erfolgt.

Die Lufttrocknungskartusche gemäß DE 699 08 918 T2 ist mit zwei radial ineinander geschachtelten Kammern ausgebildet, nämlich einer radial außenliegenden hohlzylinderförmigen Ringkammer, in welcher Trocknungsmittel und/oder Filter angeordnet sind. Diese äußere Kammer ist durch eine hohlzylinderförmige Zwischenwandung von einer radial inneren zylinderförmigen Kammer getrennt, in welcher (weiteres) Trocknungsmittel angeordnet ist. Für einen Lastbetrieb des Lufttrockners strömt Druckluft von einer Einlasskammer des Sockelelements durch Durchlässe einer Bodenwandung der Lufttrocknungskartusche in die Ringkammer und in dieser parallel zu einer Längsachse der Lufttrocknungskartusche bis in den Deckenbereich der Kartusche, wo die Druckluft über ein luftdurchlässiges Textilmaterial, eine luftdurchlässige Deckenwandung der Lufttrocknungskartusche in einen Zwischenraum zwischen der Deckenwandung der Lufttrocknungskartusche und der Deckenwandung des Deckelelements des Lufttrockners übertritt. Radial innenliegend kann dann die Druckluft von diesem Zwischenraum durch die luftdurchlässige Deckenwandung der Lufttrocknungskartusche und das luftdurchlässige Textilmaterial in die radial innenliegende zylinderförmige Kammer strömen und in dieser in Richtung der Längsachse in Richtung des Sockelelements strömen. Die Druckluft wird dann über Luftdurchlässe im Bodenbereich der Lufttrocknungskartusche und eine Auslasskammer des Sockelelements der Druckluftanlage, insbesondere den Verbraucherkreisen, zugeführt. Für einen Regenerationsbetrieb der Lufttrocknungskartusche, mittels welchem mit zuvor bereits gereinigter Druckluft Feuchtigkeit aus dem Trocknungsmittel und/oder Verunreinigungen aus den Filtern oder Sammelräumen beseitigt werden sollen, werden die Kammern zumindest teilweise in umgekehrter Richtung durchströmt.

Um das Trocknungsmittel in den Kammern festzulegen, zu kompaktieren und/oder vorzuspannen, verfügt die Lufttrocknungskartusche gemäß DE 699 08 918 T2 über jeweils ein einer Kammer zugeordnetes Vorspannelement, welches in der Art eines Kolbens axial verschieblich in der Kammer geführt ist. Auf der dem Trocknungsmittel gegenüberliegenden Seite sind die Vorspannelemente jeweils über Federn abgestützt, welche das Vorspannelement und damit das Trocknungsmittel mit einer definierten Vorspannkraft beaufschlagen. Während ein Federfußpunkt der Federn an einem Vorspannelement abgestützt ist, stützt sich der andere Federfußpunkt der Feder an einem Abstützelement ab, welches gemäß DE 699 08 918 T2 von der Bodenwandung der Lufttrocknungskartusche ausgebildet ist.

Lufttrocknungskartuschen, bei denen ein Abstützelement für eine Feder für ein Vorspannelement für das Trocknungsmittel ein gehäusefestes Deckelelement ist, sind aus US 4,673,419 A, US 5,002,593 A und EP 0 137 909 B1 bekannt.

Bekannt sind auch so genannte Spin-On-Lufttrocknungskartuschen, welche nicht über ein Federelement zwischen Sockelelement und Deckelelement des Lufttrockners verspannt sind. Vielmehr besitzen diese Ausgestaltungen der Lufttrocknungskartuschen eine massive Bodenwandung mit einer zentralen Gewindebohrung, im Bereich welcher die Bodenwandung auf einen Anschlussstutzen des Sockelelements aufgeschraubt werden kann. Der Anschlussstutzen dient gleichzeitig als Zu- oder Abführanschluss von Druckluft zu oder von der Lufttrocknungskartusche.

### AUFGABE DER ERFINDUNG

Der Erfindung liegt die Aufgabe zugrunde, eine Lufttrocknungskartusche und einen Lufttrockner mit verändertem Aufbau vorzuschlagen. Insbesondere soll der konstruktive Aufbau der Lufttrocknungskartusche hinsichtlich
- der Herstellungskosten,
- der Möglichkeiten eines Austauschs des Trocknungsmittels,
- eines Austausches des Trocknungsmittels und/oder
- des Rohstoff- und Energieaufwands
verbessert werden.

Eine Ausgestaltung der Erfindung widmet sich einer verbesserten Fixierung der Lufttrocknungskartusche in dem Lufttrockner und der Kraftaufnahme der Vorspannkräfte des Trocknungsmittels in der Lufttrocknungskartusche einerseits während der Bevorratung derselben und andererseits im Einsatz der Lufttrocknungskartusche in dem Lufttrockner.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der Erfindung zugrunde liegende Überlegungen haben zunächst zu dem Ergebnis geführt, dass geschlossene Lufttrocknungskartuschen gemäß DE 699 08 918 T2 oder auch die eingangs genannten Spin-On-Lufttrocknungskartuschen Nachteile mit sich bringen:
- Die geschlossene Ausbildung des Gehäuses der Lufttrocknungskartuschen erfordert eine aufwendige Fertigung des Gehäuses mit Schließung desselben.
- Die Fertigung eines Gewindes im Bereich der Bodenwandung der Spin-on-Lufttrocknungskartuschen erfordert eine massive Ausgestaltung der Bodenwandung, was mit zusätzlichem Materialaufwand, Gewicht, Einbauraum und letztendlich zusätzlichen Kosten verbunden sein kann.
- Gemäß DE 699 08 918 T2 führt die durch die vorgespannte Feder im Inneren des Gehäuses der Lufttrocknungskartusche erzeugte Vorspannung des Trocknungsmittels dazu, dass die hohlzylinderförmige Seitenwandung der Lufttrocknungskartusche mit einer Längskraft beaufschlagt wird, welche der Vorspannkraft entspricht. Darüber hinaus werden die Bodenwandung und Deckenwandung der Lufttrocknungskartusche mit einem von der Vorspannkraft abhängigen Biegemoment beaufschlagt. Dies kann, insbesondere für eine dünnwandige Ausbildung des Gehäuses der Lufttrocknungskartusche und/oder der Ausbildung des Gehäuses aus Kunststoff, zu unerwünschten Verformungen und schlimmstenfalls zu einem Materialversagen führen, weshalb erhöhte Wandstärken und ergänzenden Versteifungsmaßnahmen eingesetzt werden müssen.
- Ist die Lufttrocknungskartusche mit einem geschlossenen Gehäuse ausgebildet, befinden sich Abstützelement und Vorspannelement nicht zugänglich im Inneren der Lufttrocknungskartusche. Ein Einwirken auf das Abstützelement und/oder das Vorspannelement, beispielsweise zu einer Kontrolle oder Änderung der Vorspannung des Trocknungsmittels, ist für die aus dem Stand der Technik bekannten Ausgestaltungsformen nicht möglich.
- Bei einer formschlüssigen Verbindung zur Schließung des Gehäuses der Lufttrocknungskartusche erfordert ein Austausch des Trocknungsmittels, welcher ungefähr alle ein bis zwei Jahre vorgeschrieben ist, den Austausch der kompletten Kartusche inklusive des Gehäuses. Dies stellt eine unnötige Verschwendung von Rohstoffen und Energie dar.

Die vorliegende Erfindung schafft eine Verbesserung der Lufttrocknungskartusche, welche einzelne oder sämtliche der genannten Probleme (oder auch anderweitige Problemstellungen) betrifft.

Für eine erste erfindungsgemäße Lösung wird eine Lufttrocknungskartusche vorgeschlagen, bei welcher das Abstützelement von außen zugänglich ist, ohne dass dieses durch eine Gehäusewandung der Lufttrocknungskartusche abgedeckt ist. Die freie Zugänglichkeit von außen kann hierbei beliebig sein und für das gesamte Abstützelement oder auch nur einen Teilbereich desselben gelten. Die freie Zugänglichkeit bedeutet insbesondere die Möglichkeit der Ausübung von äußeren Kräften und/oder die Möglichkeit der Erzeugung einer Positionsänderung des Abstützelements von außerhalb der Lufttrocknungskartusche, was willkürlich durch einen Benutzer und/oder durch den Einbau des Lufttrockners erfolgen kann. Hierbei kann das Abstützelement einstückig, insbesondere in Form einer Abstützplatte ausgebildet sein, oder auch mit mehreren Teilelementen ausgebildet sein. Um lediglich ein Beispiel zu nennen, kann das Abstützelement mit einer Art Abstützplatte sowie einem Fortsatz, Zapfen, Bund oder Verbindungs- oder Antriebselement u. ä. gebildet sein, welcher frei von außen zugänglich ist. Durchaus denkbar ist auch, dass ein Fortsatz, Zapfen, Bund, Verbindungs- oder Antriebselement u. ä. eine Ausnehmung des Gehäuses der Lufttrocknungskartusche nach außen durchsetzt, um die freie Zugänglichkeit zu gewährleisten.

Die erfindungsgemäße freie Zugänglichkeit des Abstützelements kann vielfältige Vorteile mit sich bringen, von welchem im Folgenden nur einige mögliche exemplarisch genannt werden:
- Einerseits ist es möglich, dass vor, während oder nach der Nutzung der Lufttrocknungskartusche in dem Lufttrockner von außen auf das Abstützelement eingewirkt wird, um beispielsweise temporär oder ständig die Vorspannung des Trocknungsmittels zu beeinflussen.
- Ebenfalls möglich ist, dass durch die freie Zugänglichkeit von außen das Abstützelement von der Lufttrocknungskartusche, ggf. unter ergänzenden Demontageschritten, entfernt wird mit anschließender weiterer Demontage von Vorspannelement und Feder. Dies würde einen Austausch des Trocknungsmittels ermöglichen mit anschließender Montage von Vorspannelement, Feder und Abstützelement, so dass nach Austausch des Trocknungsmittels (und unter Umständen weiterer Filterelemente) ein Großteil der Bauelemente der Lufttrocknungskartusche, insbesondere das Gehäuse, nochmals verwendet werden kann.
- Dadurch, dass unter Umständen für die freie Zugänglichkeit des Abstützelements von außen das Gehäuse der Lufttrocknungskartusche mit einer Öffnung ausgebildet ist, kann das Gehäuse insgesamt mit einer kleineren Fläche und damit verringertem Materialeinsatz und Gewicht ausgebildet werden.

Für eine alternative oder kumulative Lösung der der Erfindung zugrunde liegenden Aufgabe stützt sich das Abstützelement nicht über die insbesondere hohlzylinderförmige Seitenwandung der Lufttrocknungskartusche (ausschließlich) ab. Vielmehr ist für diese Ausgestaltung das Vorspannelement in einem Deckenbereich der Lufttrocknungskartusche angeordnet. Das (ebenfalls im Deckenbereich der Lufttrocknungskartusche angeordnete) Abstützelement ist an der Bodenwandung der Lufttrocknungskartusche abgestützt, was über (mindestens) ein sich durch die Lufttrocknungskartusche hindurch erstreckendes Zugelement erfolgt. Hierdurch können die Seitenwandungen des Gehäuses der Lufttrocknungskartusche von den Vorspannkräften freigehalten werden, wodurch sich eine erhöhte Dauerfestigkeit ergibt und/oder die Wandstärken der Seitenwandungen reduziert werden können sowie unter Umständen erst der Einsatz von Kunststoff für die Seitenwandung und damit das Gehäuse der Lufttrocknungskartusche möglich wird. Andererseits verringert das sich durch die Lufttrocknungskartusche hindurch erstreckende Zugelement den Hebelarm und damit das Biegemoment, welches infolge der Vorspannkraft auf den Bodenbereich ausgeübt wird. Im Extremfall kann auch ein zentrales, sich koaxial zur Längsachse erstreckendes Zugelement vorhanden sein, welches dazu führt, dass die Biegebelastung minimiert oder vollständig beseitigt ist. Hierdurch kann auch die Dimensionierung der Bodenwandung des Gehäuses der Lufttrocknungskartusche verringert werden und/oder der Einsatz von Kunststoff für die Bodenwandung ermöglicht werden. Diese Ausgestaltung der Erfindung kann auch grundsätzlich Einsatz finden für ein geschlossenes Gehäuse gemäß DE 699 08 918 T2, in dem dann erfindungsgemäß das Dichtelement nicht die Funktion der Fixierung der Lufttrocknungskartusche in dem Lufttrockner übernehmen muss. Vorzugsweise findet diese Ausgestaltung der Erfindung aber auch Einsatz für eine Lufttrocknungskartusche, bei welcher das Abstützelement von außen frei zugänglich ist, wie dies zuvor erläutert worden ist.

Grundsätzlich sind beliebige Ausgestaltungsformen des Gehäuses der Lufttrocknungskartusche, der Gewährleistung der freien Zugänglichkeit des Abstützelements und der Ausgestaltung und Anordnung von Abstützelement, Feder und Vorspannelement möglich. Für eine weitere Ausgestaltung der Erfindung ist ein Gehäuse der Lufttrocknungskartusche mit einer Öffnung zu einem Innenraum der Lufttrocknungskartusche ausgebildet. In dem Innenraum ist das Trocknungsmittel angeordnet. Ein Abstützelement verschließt die Öffnung des Gehäuses zumindest teilweise. Um hier lediglich ein Beispiel zu nennen, kann das Gehäuse der Lufttrocknungskartusche mit der hohlzylinderförmigen Seitenwandung im oberen Endbereich eine kreisförmige Öffnung ausbilden, in welche (in grober vereinfachender Beschreibung) ein "kolbenartiges" Vorspannelement eintritt, welches das Trocknungsmittel komprimiert. Parallel zu diesem kolbenartigen Vorspannelement kann dann das Abstützelement, beispielsweise eine Abstützplatte, angeordnet sein, welche innerhalb der hohlzylinderförmigen Seitenwandung oder außerhalb derselben angeordnet ist und die Öffnung zumindest teilweise verschließt. Zwischen Vorspannelement und Abstützelement ist auch in diesem Fall mindestens eine Feder zwischengeordnet.

Durchaus denkbar ist, dass das Abstützelement unmittelbar oder mittelbar gegenüber dem Gehäuse fixiert ist. Entsprechend einer Weiterbildung der erfindungsgemäßen Lufttrocknungskartusche ist allerdings das Abstützelement bewegbar, wobei mit einer Bewegung des Abstützelements die Beaufschlagung der (mindestens einen) Feder und damit auch der Vorspannkraft verändert wird. Die Bewegung des Abstützelements in eine Richtung von dem Trocknungsmittel weg ist begrenzt durch eine Begrenzung. Diese Begrenzung ist gehäusefest, also mit dem Gehäuse verbunden, von diesem gehalten oder von dem Gehäuse selbst ausgebildet. Über die Ausstattung des Abstützelements mit einem Bewegungsfreiheitsgrad kann eine Veränderung einer Vorspannung des Trocknungsmittels herbeigeführt werden. Andererseits stellt das unter Beaufschlagung der Feder bewegbare Abstützelement (abweichend zu einem gehäusefesten Abstützelement) ein Federelement dar, welches für eine anderweitige Funktion genutzt werden kann. Somit ist das Abstützelement multifunktional, in dem dieses einerseits für die (u. U. veränderliche) Vorspannung des Trocknungsmittels zuständig ist und andererseits für ein weiteres Federelement mit anderweitiger Funktion genutzt werden kann. Durch eine Begrenzung des Bewegungsfreiheitsgrads des Abstützelements kann eine definierte Endlage mit einer minimalen Vorspannung des Trocknungsmittels vorgegeben werden. Darüber hinaus kann u. U. durch die Begrenzung des Bewegungsfreiheitsgrads des Abstützelements gewährleistet werden, dass die derart gebildete Lufttrocknungskartusche eine transport- und lagerfähige Einheit bildet, auch wenn die Lufttrocknungskartusche nicht in einem Lufttrockner montiert ist.

Durch den erläuterten Bewegungsfreiheitsgrad des Abstützelements und die Nutzung des Abstützelements als Federelement zum Verspannen der Lufttrocknungskartusche in dem Lufttrockner kann auch ein gewisser Toleranzausgleich erfolgen, wodurch die Fertigungsanforderungen für den Lufttrockner und die Lufttrocknungskartusche reduziert werden können.

Erfindungsgemäß kann gewährleistet werden, dass während der Bevorratung sowie des Transports der Lufttrocknungskartusche das Trocknungsmittel mit einer geringeren Vorspannkraft beaufschlagt wird als dies für den Betrieb der Lufttrocknungskartusche in dem Lufttrockner der Fall ist, wenn in der Lufttrocknungskartusche wechselnde Innendrücke bis hin zu ca. 13 bar wirken und das Trocknungsmittel bei Vibrationen des Lufttrockners einem Verschleiß ausgesetzt sein könnte.

Die Nutzung des mit dem Abstützelement bereitgestellten Federelements kann beliebig sein. In einer bevorzugten Ausgestaltung der Erfindung ist die Begrenzung derart angeordnet und ausgebildet, dass, wenn sich das Abstützelement in der durch die Begrenzung vorgegebenen Position befindet, eine von dem Abstützelement vorgegebene Dimension der Lufttrocknungskartusche größer ist als die entsprechende Dimension eines Gehäuses eines Lufttrockners, für welchen die Lufttrocknungskartusche bestimmt ist. Dies soll anhand eines einfachen, nicht beschränkenden Beispiels erläutert werden: Beträgt als Dimension die Längserstreckung der Lufttrocknungskartusche zwischen einem Anlagebereich des Abstützelements in der durch die Begrenzung vorgegebenen Position und der Bodenwandung L und ist der Abstand eines Gegen-Anlagebereichs der Deckenwandung des Gehäuses des Lufttrockners, an welchem der Anlagebereich des Abstützelements in montiertem Zustand anliegen soll, von dem Anlagebereich der Bodenwandung der Lufttrocknungskartusche an einem Sockelelement A, wird erfindungsgemäß eine Dimensionierung mit L > A konstruktiv vorgegeben, wobei L - A = F gilt. Eine Montage der Lufttrocknungskartusche in dem Lufttrockner erfordert somit, dass das Abstützelement von der Begrenzung weg entlang des Bewegungsfreiheitsgrads um den Weg F bewegt wird. Diese Bewegung hat einerseits zur Folge, dass die Vorspannkraft der Feder und des Trocknungsmittels erhöht wird, wobei sich die Erhöhung der Vorspannkraft aus dem Produkt von F mit der Federsteifigkeit der Feder ergibt. Andererseits hat diese Bewegung zur Folge, dass die Vorspannkraft in der Feder nicht mehr durch die Begrenzung aufgenommen wird. Vielmehr stützt sich das Abstützelement nach dieser Bewegung um die Distanz F mit der Vorspannkraft an dem Deckenbereich des Gehäuses des Lufttrockners ab, so dass die Lufttrocknungskartusche unter Verspannung in dem Gehäuse des Lufttrockners gefangen sein kann, womit eine Fixierung der Lufttrocknungskartusche in dem Lufttrockner erfolgen kann. Hierbei kann die Montage des Lufttrockners derart erfolgen, dass zunächst ein Deckelelement mit der Erzeugung der Verschiebung F des Abstützelements der Kartusche an das Sockelelement angenähert wird mit erst dann erfolgender, beispielsweise formschlüssiger Verbindung zwischen Deckelelement und Sockelelement des Lufttrockners. Von Vorteil kann allerdings auch sein, wenn das Deckelelement des Lufttrockners auf das Sockelelement des Lufttrockners aufgeschraubt wird, wobei mit zunehmender Verschraubung von Deckelelement mit Sockelelement sukzessive die Bewegung des Abstützelements und die Erhöhung der Vorspannkraft erfolgt.

Die Begrenzung kann durch beliebige Maßnahmen gebildet sein. Beispielsweise kann die Begrenzung von einem nach innen abgewinkelten oberen Rand oder Teilbereich der Seitenwandung ausgebildet sein. Für eine besondere Ausgestaltung der erfindungsgemäßen Lufttrocknungskartusche ist die Begrenzung allerdings von (mindestens) einem Zugelement gebildet, welches die Lufttrocknungskartusche durchsetzt. Vorzugsweise erstreckt sich das Zugelement durch das Trocknungsmittel selbst. Das Zugelement erstreckt sich unter Umständen von dem oberen Endbereich der Lufttrocknungskartusche bis zu dem gegenüberliegenden Endbereich der Lufttrocknungskartusche, bspw. bis zu einer Bodenwandung der Lufttrocknungskartusche. Möglich ist, dass lediglich ein derartiges Zugelement eingesetzt ist, welches dann vorzugsweise koaxial zur Längsachse angeordnet ist. Ebenfalls möglich ist auch die Verwendung mehrerer derartiger Zugelemente, die zentral oder dezentral angeordnet sein können. Beispielsweise können zwei, drei, vier oder mehr Zugelemente mit gleichem Abstand zur Längsachse in einem Horizontalschnitt gleichmäßig in Umfangsrichtung um die Längsachse verteilt angeordnet sein. In weiterer Ausgestaltung der Erfindung kann das Zugelement nicht nur ausschließlich für die Begrenzung des Bewegungsfreiheitsgrads des Abstützelements genutzt sein. Vielmehr ist ebenfalls möglich, dass das Zugelement eine Mantelfläche besitzt, welche als Führungsfläche für eine Führung des Abstützelements und/oder des Vorspannelements genutzt ist.

Grundsätzlich kann das Zugelement beliebig ausgebildet sein. Gemäß einem Vorschlag der Erfindung ist das Zugelement als Zuganker oder Zugstab ausgebildet. Ebenfalls denkbar ist der Einsatz eines Drahts, Stabs, einer Schraube oder eines Rohrs als Zugelement.

Für eine Ausgestaltung der Erfindung findet nicht nur eine Feder zwischen Abstützplatte und Vorspannelement Einsatz. Vielmehr sind mehrere derartige Federn zwischen Abstützplatte und Vorspannelement wirksam. Beispielsweise können mehrere Federn gleichmäßig über einen Umfang um die Längsachse verteilt sein.

Auch für die Ausgestaltung des Abstützelements gibt es vielfältige von der Erfindung umfasste Möglichkeiten. Für eine Ausgestaltung des Abstützelements weist dieses einen außenliegenden, also für nicht montierte Lufttrocknungskartusche frei zugänglichen Anlagebereich, auf. Wird dann die Lufttrocknungskartusche mit dem Gehäuse des Lufttrockners montiert, kommt der Anlagebereich zur Anlage an einen Gegen-Anlagebereich des Gehäuses des Lufttrockners, womit dann die Bewegung des Abstützelements entlang des Bewegungsfreiheitsgrads erzeugt werden kann. Möglich ist, dass der Anlagebereich mit einer durchgehenden Anlagefläche, beispielsweise einer Ringfläche ausgebildet ist, welche koaxial zur Längsachse der Lufttrocknungskartusche angeordnet ist. Ebenfalls möglich sind mehrere Teilanlageflächen, welche über den Umfang der Längsachse verteilt angeordnet sein können. Durch derart dezentral zur Längsachse angeordnete Anlageflächen kann gewährleistet werden, dass sich zumindest das Abstützelement, vorzugsweise aber auch das Vorspannelement, in definierter Ausrichtung zu dem Gehäuse des Lufttrockners ausrichtet/ausrichten. Der Anlagebereich des Abstützelements und der Gegen-Anlagebereich können auch spezifisch für die Ermöglichung einer Gleitbewegung zwischen dem Abstützelement und dem Gehäuse des Lufttrockners ausgebildet sein, um hier eine Gleitbewegung mit einem Verschrauben des Gehäuses des Lufttrockners zu ermöglichen. Insbesondere kann eine entsprechende Beschichtung oder Schmierung des Anlagebereichs und/oder Gegen-Anlagebereichs vorhanden sein. Durchaus möglich ist aber auch, dass der Anlagebereich mit einer zentralen Anlagefläche, also im Bereich der Längsachse der Lufttrocknungskartusche gebildet ist, so dass sich die Relativbewegung zwischen Gehäuse des Lufttrockners und Anlagebereich des Abstützelements mit dem Verschrauben des Gehäuses des Lufttrockners minimiert.

Eine weitere Lösung der der Erfindung zugrunde liegenden Aufgabe ist gegeben durch einen Lufttrockner für eine Druckluftanlage eines Nutzfahrzeugs mit einer Lufttrocknungskartusche, wie diese zuvor erläutert worden ist. Für in dem Lufttrockner montierte Lufttrocknungskartusche liegt das Abstützelement an einem Gehäuseteil des Lufttrockners, beispielsweise einem Deckelelement, an. Die Feder, welche zwischen das Vorspannelement und das Abstützelement der Lufttrocknungskartusche zwischengeschaltet ist, ist in diesem Fall erfindungsgemäß multifunktional eingesetzt:
- Einerseits beeinflusst die Feder die Vorspannung des Trocknungsmittels.
- Andererseits dient die Feder der Verspannung der Lufttrocknungskartusche zwischen zwei Gehäuseteilen des Lufttrockners, beispielsweise zwischen dem Sockelelement und dem Deckelelement des Lufttrockners, wodurch eine Fixierung der Lufttrocknungskartusche in dem Lufttrockner erfolgt. Hierdurch können sich zusätzliche Fixierungen der Lufttrocknungskartusche gegenüber dem Lufttrockner erübrigen, wobei diese natürlich auch noch zusätzlich erfolgen können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Zugelement oder einer Feder die Rede ist, ist dies so zu verstehen, dass genau ein Zugelement oder genau eine Feder, zwei Zugelemente oder Federn oder mehrere Zugelemente oder Federn vorhanden sein können.

### KURZBESCHREIBUNG DER FIGUREN

Im Folgenden wird die Erfindung anhand in den Figuren dargestellter bevorzugter Ausführungsbeispiele weiter erläutert und beschrieben.

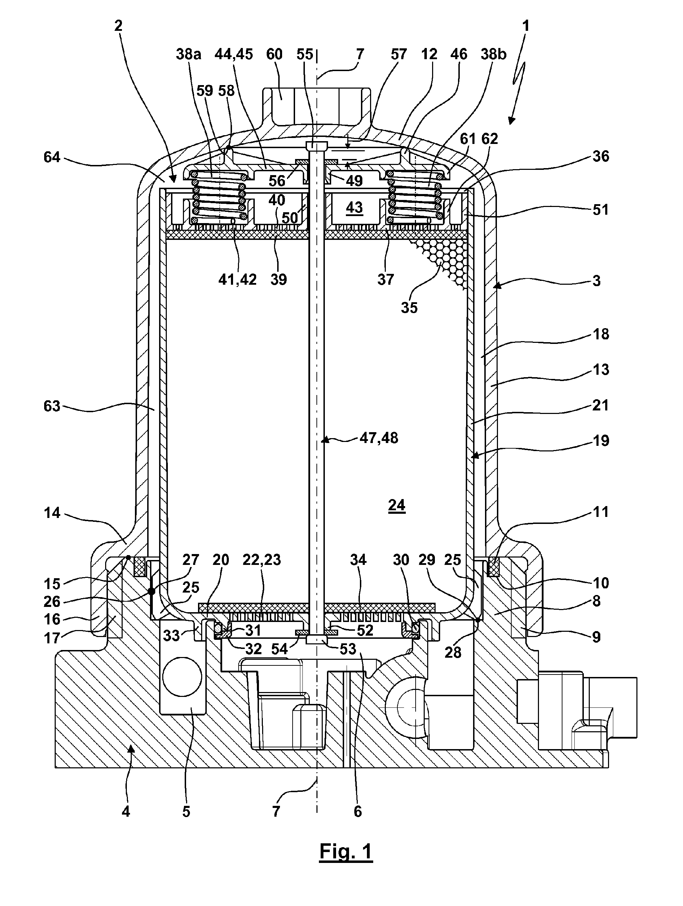

- **Fig. 1 bis 5**: zeigen in einem Längsschnitt unterschiedliche Ausgestaltungen eines Lufttrockners mit einer Lufttrocknungskartusche gemäß der vorliegenden Erfindung.

### FIGURENBESCHREIBUNG

**Fig.1** zeigt einen Lufttrockner 1 mit darin angeordneter Lufttrocknungskartusche 2. Der Lufttrockner ist mit einem Sockelelement 3 sowie einem in erster Näherung glockenförmigen Deckelelement 4 gebildet. Das Sockelelement 3 bildet eine Einlasskammer 5 aus, welche (im Lastbetrieb) mit einer Druckluftquelle, insbesondere einem Kompressor, verbunden ist. Darüber hinaus verfügt das Sockelelement 4 über eine Auslasskammer 6, welche mit der Druckluftanlage, insbesondere mindestens einem Verbraucherkreis, verbunden ist. Das Sockelelement 4 besitzt einen koaxial zu einer Längsachse 7-7 orientierten ringförmigen Bund 8, welcher ein Außengewinde 9 besitzt. Stirnseitig verfügt der Bund 8 über eine Nut 10, in welche ein ringförmiges Dichtelement 11 eingesetzt ist. Das Sockelelement 4 ist massiv ausgebildet und beispielsweise als Form- oder Gussteil hergestellt. Das Sockelelement 4 ist vorzugsweise aus Metall, einem Leichtmetall wie Aluminium oder Kunststoff hergestellt.

Das Deckelelement 3 ist glockenartig ausgebildet mit einer dom- oder kuppelartigen, gewölbten Deckenwandung 12 und einer hohlzylinderförmigen Seitenwandung 13. Möglich ist, dass zur Vereinfachung eines Entformens die Seitenwandung 13 konisch nach unten erweitert ausgebildet ist. In dem der Deckenwandung 13 abgewandten Endbereich verfügen die Seitenwandungen 13 über eine radiale Erweiterung 14, von welcher eine Stirnfläche 15 ausgebildet ist, sowie einen hohlzylinderförmigen Verbindungsbereich 16, welcher über ein Innengewinde 17 verfügt.

Deckelelement 3 und Sockelelement 4 sind vorzugsweise massiv und einstückig ausgebildet und beispielsweise als Form- oder Gussteil hergestellt und bspw. aus Metall, einem Leichtmetall wie Aluminium oder Kunststoff hergestellt.

In montiertem Zustand begrenzen das Deckelelement 3 und das Sockelelement 4 einen Innenraum 18, in welchen die Einlasskammer 5 sowie die Auslasskammer 6 münden. In dem Innenraum 18 befindet sich die Lufttrocknungskartusche 2.

Die Lufttrocknungskartusche 2 ist mit einem Gehäuse 19 gebildet, welches in dem dargestellten Längsschnitt ungefähr U-förmig ausgebildet ist und rotationssymmetrisch ist. Hierbei bildet der Querschenkel des U eine Bodenwandung 20, während die beiden parallelen Längsschenkel des U eine Seitenwandung 21 bilden. Die Bodenwandung 20 verfügt über Durchlässe 22, insbesondere Bohrungen 23, über welche ein Übertritt von Druckluft zwischen einem Innenraum 24 des Gehäuses 19 und der Auslasskammer 6 ermöglicht ist. Im Übergangsbereich zwischen der Bodenwandung 20 und der Seitenwandung 21 verfügt das Gehäuse 19 über flügelartige, über den Umfang verteilte Rippen 25. Die Rippen 25 besitzen parallel zur Längsachse 7-7 orientierte radiale Führungsflächen 26, welche zur radialen Führung, Positionierung und Ausrichtung in Wechselwirkung treten mit einer zylinderförmigen Führungsfläche 27, welche von der Innenfläche des Bunds 8 ausgebildet ist. Darüber hinaus liegen die Rippen 25 mit einer dem Sockelelement 4 zugewandten Stirnfläche 28 an einem Absatz 29 des Sockelelements 4 an, womit die Längsposition der Lufttrocknungskartusche 2 gegenüber dem Sockelelement 4 vorgegeben ist. Zwischen Sockelelement 4 und Bodenwandung 20 ist ein Dichtelement 30 zwischengeordnet, welches einen Übertritt von Druckluft zwischen der Einlasskammer 5 und der Auslasskammer 6 unterbindet. Für das in Fig. 1 dargestellte Ausführungsbeispiel ist das Dichtelement 30 in einer radial nach innen orientierten Nut angeordnet, wobei eine im Halblängsschnitt L-förmige Nuthälfte von einem koaxial zur Längsachse 7-7 orientierten Ringbund 31 der Bodenwandung 20 ausgebildet ist, während die andere Nuthälfte von einem ringförmigen Teller 32 gebildet ist, welcher sich an dem Ringbund 31 abstützt und zwischen diesem und dem Sockelelement 4 in montiertem Zustand gefangen ist. Radial außenliegend liegt das Dichtelement 30 an einer hohlzylinderförmigen Dichtfläche des Sockelelements 4 an. Möglich ist, dass radial außenliegend von dem Dichtelement 30 die Bodenwandung einem weiteren Ringbund 33 ausbildet, welcher einer Versteifung der Bodenwandung dienen kann und/oder als Zentrier- und Montagehilfe dienen kann.

In dem Innenraum 24 liegt auf der Bodenwandung 20 ein Flies, Filter oder Textilmaterial 34 auf, womit die Durchlässe 22 abgedeckt sind. Hierauf ist in dem Innenraum 24 das in den Figuren lediglich angedeutete Trocknungsmittel 35 angeordnet. Auf der der Bodenwandung 20 gegenüberliegenden Seite bilden die Endbereiche der Seitenwandung 21 des Gehäuses 19 eine Öffnung 36 aus, durch welche das Flies 34 und das Trocknungsmittel 35 in den Innenraum 24 des Gehäuses 19 eingebracht werden können. In die Öffnung 36 tritt kolbenartig ein Vorspannelement 37 ein, welches durch mindestens eine Feder 38, hier zwei oder mehr Federn 38a, 38b, in Richtung der Bodenwandung 20 beaufschlagt ist. Somit wird über das Vorspannelement 37 eine Vorspannung des Trocknungsmittels 35 zwischen dem Vorspannelement 37 und der Bodenwandung 20 erzeugt. Für das in Fig. 1 dargestellte Ausführungsbeispiel ist zwischen das Vorspannelement 37 und das Trocknungsmittel 35 ein weiteres Flies, ein textiles Material oder ein Filter 39 zwischengeordnet. Das Vorspannelement 37 ist mit einer Vorspannplatte 40 gebildet, welche einen hohlzylinderförmigen Führungsbund 51 aufweist, der mit einem geringen Spalt eine Führung und gewisse Abdichtung der Vorspannplatte 40 gegenüber der Seitenwandung 21 gewährleistet. Die Vorspannplatte 40 verfügt über Durchlässe 41, hier Bohrungen 42, über welche Druckluft von einem Außenbereich 43 der Lufttrocknungskartusche 2 zu dem Innenraum 24 mit dem Trocknungsmittel 35 (und umgekehrt) gelangen kann. Ein Federfußpunkt der Feder 38a, 38b ist an dem Vorspannelement 37 abgestützt. Der andere Federfußpunkt der Feder 38a, 38b ist abgestützt an einem Abstützelement 44. Für das dargestellte Ausführungsbeispiel ist das Abstützelement 44 als plattenförmige Abstützplatte 45 ausgebildet. Das Abstützelement 44 verfügt auf der der Feder 38a, 38b abgewandten Seite über einen Abstützbund 46, dessen Stirnfläche in einem Anlagebereich 58 an einen Gegen-Anlagebereich 59 der Deckenwandung 12 des Deckelelements 3 des Lufttrockners 1 in der in Fig. 1 skizzierten Betriebsstellung des Lufttrockners 1 angepresst ist. In diesem Zustand ist die Feder 38a, 38b vorgespannt.

Koaxial zur Längsachse 7-7 erstreckt sich durch die Lufttrocknungskartusche 2 und das Trocknungsmittel 35 ein Zugelement 47, welches gemäß Fig. 1 als Stab oder Draht 48 ausgebildet ist. Sowohl das Vorspannelement 37 als auch das Abstützelement 44 verfügen über eine zentrische Führungsbuchse 49, 50, durch welche das Zugelement 47 hindurchtritt, wobei sowohl das Abstützelement 44 als auch das Vorspannelement 37 einen Bewegungsfreiheitsgrad gegenüber dem Zugelement 47 entlang der Längsachse 7-7 haben. Während das Vorspannelement 37 sowohl durch den Führungskontakt zwischen Führungsbuchse 50 und der Mantelfläche des Zugelements 47 als auch durch den Führungskontakt zwischen Führungsbund 51 und der innenliegenden Mantelfläche der Seitenwandung 21 geführt ist, erfolgt eine Führung des Abstützelements 44 ausschließlich durch den Kontakt der Führungsbuchse 49 mit der Mantelfläche des Zugelements 47. Ergänzende Relativkräfte auch quer zur Längsachse 7-7 werden unter Umständen durch die Feder 38a, 38b erzeugt.

Das Zugelement 47 ist fest oder begrenzt verschieblich in Richtung der Längsachse 7-7 mit der Bodenwandung 20 verbunden. Hierzu tritt für das Ausführungsbeispiel gemäß Fig. 1 das Zugelement 47 durch eine Halte- oder Führungsbuchse 52 durch eine zentrische Bohrung der Bodenwandung 20 hindurch. Auf der dem Trocknungsmittel 35 abgewanden Seite erfolgt eine Begrenzung des Freiheitsgrads des Zugelements 47 gegenüber der Bodenplatte 20 einseitig dadurch, dass hier das Zugelement 47 mit einer Begrenzung oder Verdickung 53 ausgestattet ist. Für das in Fig. 1 dargestellte Ausführungsbeispiel ist zwischen Begrenzung 53 und Führungsbuchse 52 noch eine Scheibe 54 zwischengeordnet.

Das Zugelement 47 tritt auf der der Feder 38a, 38b abgewandten Seite aus dem Abstützelement 44 heraus, wo dieses ebenfalls mit einer Begrenzung oder Verdickung 55 ausgestattet ist. In Fig. 1 ist zwischen Begrenzung 55 und Abstützelement 44 ebenfalls eine auf dem Zugelement 47 geführte Scheibe 56 zwischengeordnet.

In dem in Fig. 1 dargestellten montierten Zustand ist zwischen dem Abstützelement 44 und der Begrenzung 55 ein Spiel 57 ausgebildet, welches eingangs auch mit F bezeichnet ist. Für die Ausführungsform gemäß Fig. 1 ist das Zugelement 47 gegenüber der Bodenwandung 20 fixiert, so dass sich das Spiel 57 zwischen Begrenzung 55 und Abstützelement 44 ausbildet. Es versteht sich, dass bei Gleitführung zwischen Führungsbuchse 52 und Zugelement 47, ggf. auch mit einer Fixierung des Zugelements 47 in der Führungsbuchse 49 das Spiel 57 auch zwischen der Bodenwandung 20 und der Begrenzung 53 ausgebildet sein kann.

Für demontiertes Deckelelement 3, also beispielsweise eines Transports und/oder Bevorratung der Lufttrocknungskartusche 2 und zu Beginn eines Montagezustands oder Ende eines Demontagezustands liegt das Abstützelement 44 (unter Zwischenschaltung der Scheibe 56) an der Begrenzung 55 an, so dass das Spiel 57 nicht vorhanden ist. Das Abstützelement 44 hat sich gegenüber der in Fig. 1 dargestellten Betriebsstellung relativ zu dem Zugelement 47 um den Abstand F nach oben bewegt. Infolge der Begrenzung 55 ist es aber nicht möglich, dass das Abstützelement 44 ohne weitere Maßnahmen vollständig entfernt wird. Vielmehr sind die Scheibe 54, die Bodenwandung 20, das Flies 34, das Trocknungsmittel 35, das Flies 39, das Vorspannelement 37, die Feder 38a, 38b, das Abstützelement 44 und die Scheibe 56 zwischen den beiden Begrenzungen 53, 55 gefangen.

Für eine Montage der Lufttrocknungskartusche 2 in dem Lufttrockner 1 wird für entferntes Deckelelement 3 die Lufttrocknungskartusche 2 auf das Sockelelement 4 aufgesetzt. In diesem Zustand liegt das Abstützelement 44 unter Zwischenschaltung der Scheibe 56 an der Begrenzung 55 an. Nun wird das Deckelelement 3 mit dem Sockelelement 4 montiert, was erfolgt durch Aufschrauben des Innengewindes 17 des Deckelelements 3 auf das Außengewinde 9 des Sockelelements 4. Im Zuge dieses Verschraubens kommt der von der Stirnseite des Abstützbunds 64 ausgebildete Anlagebereich 58 zur Anlage an den Gegen-Anlagebereich 59 der Deckenwandung 12 des Deckelelements 3. Mit weiterer Verschraubung des Deckelelements 3 mit dem Sockelelement 4 nimmt die sich nach unten in Richtung der Längsachse 7-7 bewegende Deckenwandung 12 mit dem Gegen-Anlagebereich 59 das Abstützelement 44 mit, womit das Spiel 57 ausgebildet und vergrößert wird. Während dieser zunehmenden Verschraubung steigt die Vorspannung der Feder 38a, womit einerseits auch die Verspannung der Lufttrocknungskartusche 2 in dem Lufttrockner 1 in Richtung der Längsachse 7-7 ansteigt und andererseits die Vorspannung des Trocknungsmittels 35 erhöht wird. Zur Herbeiführung der Schraubbewegung kann das Deckelelement 3 im Bereich der Deckenwandung 12 mit einem Innensechskant 60 ausgestattet sein. Mit der Verschraubung erfolgt auch eine Abdichtung des Innenraums 18 dadurch, dass die Stirnfläche 15 des Deckelelements 3 an das Dichtelement 11 angepresst wird.

Die Federfußpunkte der Feder 38a, 38b können in Führungselementen des Vorspannelements 37 und des Abstützelements 44 geführt sein, welche in Fig. 1 jeweils mit einem Ringbund 61, 62 ausgebildet sind.

Während einer Lastphase ist der Druckluftstrom in dem Lufttrockner 1 gemäß Fig. 1 wie folgt: Die Druckluft gelangt von der Einlasskammer 5 über Zwischenräume zwischen den Rippen 25 zu einem Zwischenraum 63, welcher zwischen der Innenfläche der Seitenwandung 13 des Deckelelements 3 und der Außenfläche der Seitenwandung 21 der Lufttrocknungskartusche 3 gebildet ist. In dem Zwischenraum 63 strömt die Druckluft nach oben. Unterhalb der Deckenwandung 12 des Deckelelements 3 kehrt sich die Strömungsrichtung um. Über eine verbleibende Restöffnung 64, welche sich zwischen dem oberen Rand der Seitenwandung 21 und dem dem äußeren Rand des Abstützelements 44 ergibt und die gemäß Fig. 1 ringförmig ausgebildet ist, tritt die Druckluft über zu dem Außenbereich 43 und von dort über die Durchlässe 41, das Flies 39, das Trocknungsmittel 35, das Flies 34 und die Durchlässe 22 zu der Auslasskammer 6.

Für die Ausbildung der Begrenzungen 53, 55 gibt es vielfältige Möglichkeiten. Für das dargestellte Ausführungsbeispiel gemäß Fig. 1 mit Ausbildung des Zugelements 47 als Stab oder Draht 48 sind die Begrenzungen 53, 55 durch einen Umformvorgang, nämlich durch Flachdrücken der Enden des Drahts 48 von einem Kreisquerschnitt zu einem Querschnitt mit Teilkreisbögen und Abflachungen hergestellt.

Das Gehäuse 19, das Vorspannelement 37 und/oder das Abstützelement 44 sind aus Metall, einem Leichtmetall oder Kunststoff hergestellt, was in einem Form- oder Spritzgießverfahren erfolgen kann.

Für beseitigtes Deckelelement 3 ist das Abstützelement 44 frei von außen zugänglich, so dass dieses nicht durch eine Gehäusewandung der Lufttrocknungskartusche 2 abgedeckt ist.

Möglich ist, dass, mit Beseitigung der Begrenzung 55, beispielsweise durch Rückformen, nach Demontage der Lufttrocknungskartusche 2 Abstützelement 44, Feder 38, Vorspannelement 37 beseitigt werden, wozu diese auch mit weiteren, hier nicht dargestellten Maßnahmen, zu einer Baueinheit miteinander verbunden sein können. Dann ist es möglich, ein auszutauschendes Trocknungsmittel 35 aus dem Innenraum 24 zu entfernen (ggf. zusammen mit weiteren auszutauschenden Filterelementen). Es kann dann ein neues Trocknungsmittel eingesetzt werden mit anschließender erneuter Montage des Vorspannelements 37, der Feder 38 und des Abstützelements 44 mit erneuter Verformung der Begrenzungen 55. Es versteht sich, dass anderweitige Begrenzungen 53, 55 vorgesehen sein können, beispielsweise auch eine gegen einen Absatz des Zugelements 47 verschraubte Mutter oder eine anderweitig lösbare oder aufhebbare Begrenzung.

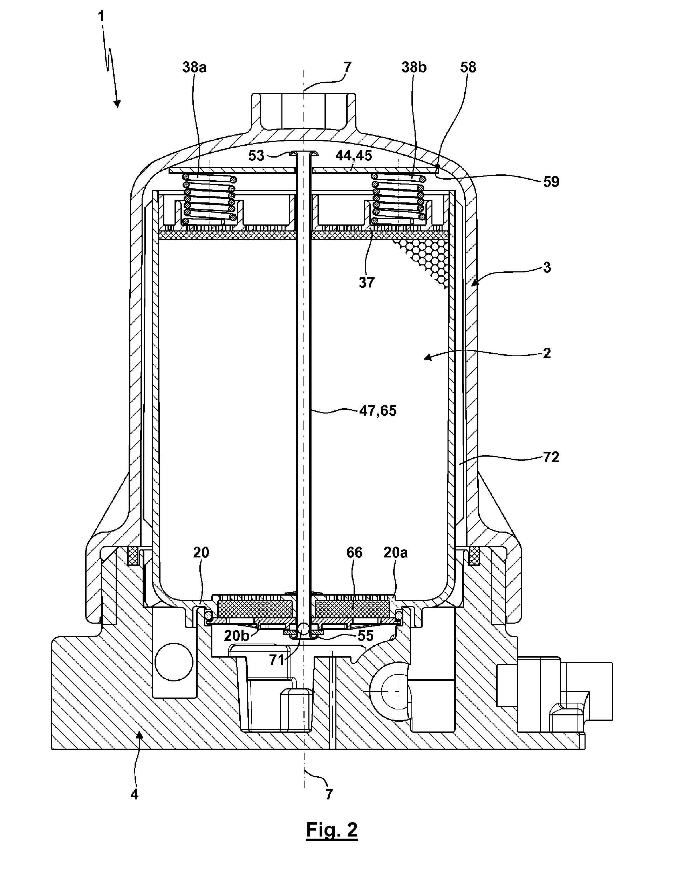

**Fig. 2** zeigt eine Lufttrocknungskartusche 2 in einem Lufttrockner 1 bei bis auf weiteres Fig. 1 entsprechender Ausgestaltung. In diesem Fall ist allerdings abweichend das Abstützelement 44 als reine ebene Kreisscheibe ausgebildet, also ohne den Abstützbund 46 und ohne Ringbunde 61 zur Aufnahme der Federn 38a, 38b. In diesem Fall wird der Anlagebereich 58 ausgebildet von dem radial außenliegenden Randbereich der Abstützplatte 45.

Darüber hinaus ist in Fig. 2 das Zugelement 47 nicht als Stab oder Draht 48 ausgebildet, sondern vielmehr mit einem Rohr 65 gebildet. Dieses ist zwecks Bildung der Begrenzungen 53, 55 jeweils in den Endbereichen genietet oder aufgeweitet. In Fig. 2 kann in das Rohr 65 eine Kugel 71 eingepresst sein, um einen Bypass für die Druckluft über das Rohr 65 zu schließen.

Gemäß der Ausführungsform in Fig. 2 ist die Seitenwandung 21 des Gehäuses 19 der Lufttrocknungskartusche 2 mit Rippen ausgestattet, deren radial außenliegende Stirnseite zu Führungszwecken zur Anlage kommt an die Innenfläche der Seitenwandung 13 des Deckelelements 3.

Schließlich ist die Bodenwandung 20 für das Ausführungsbeispiel gemäß Fig. 2 mehrteilig ausgebildet mit Bodenwandungsteilen 20a, 20b. Der Übertritt der Druckluft aus dem Innenraum 24 zu der Auslasskammer 6 erfolgt hier von den Durchlässen 22 in dem oberen Bodenwandungsteil 20a über einen zusätzlichen Filter 66, welcher zwischen den beiden Bodenwandungsteilen 20a, 20b gehalten ist. Hierbei erfolgt auch eine Sicherung des unteren scheibenartigen Bodenwandungsteils 20b über die Begrenzung 55 wie in Fig. 2 dargestellt.

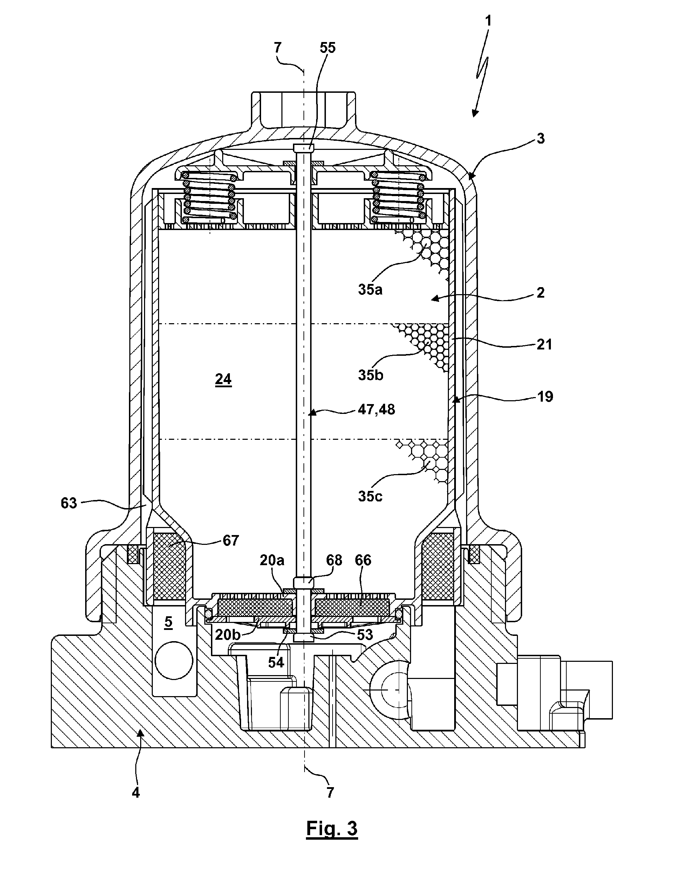

Bei ansonsten Fig. 1 entsprechender Ausgestaltung ist die Seitenwandung 21 der Lufttrocknungskartusche 2 gemäß **Fig. 3** im Übergangsbereich zu der Bodenwandung verjüngt ausgebildet, so dass hier ein Filter 67 angeordnet sein kann, welcher zwischen die Einlasskammer 5 und den Zwischenraum 63 zwischengeordnet ist. Für das dargestellte Ausführungsbeispiel ist hierzu das Gehäuse 19 mit zwei koaxialen, hohlzylinderförmigen Wandungsteilen ausgebildet, zwischen welchen der Filter 67 angeordnet ist. Darüber hinaus ist in Fig. 3 zu erkennen, dass in dem Innenraum 24 auch unterschiedliche Trocknungsmittel 35a, 35b und 35c geschichtet sein können. Zusätzlich findet im Bereich der Bodenwandung 20 ein Filter 66 Einsatz, wie dieser für Fig. 2 beschrieben und dargestellt ist.

Als weitere Besonderheit gemäß Fig. 3 verfügt das Zugelement 47, welches mittels eines Stabs oder Drahts 48 gebildet ist, nicht lediglich über die endseitigen Begrenzungen oder Verdickungen 53, 55. Vielmehr ist eine zusätzliche Verdickung 68 vorhanden, zwischen welchen die Scheibe 54, das Bodenwandungsteil 20b, der Filter 66 und das Bodenwandungsteil 20a (mit einer weiteren Scheibe) gefangen sind.

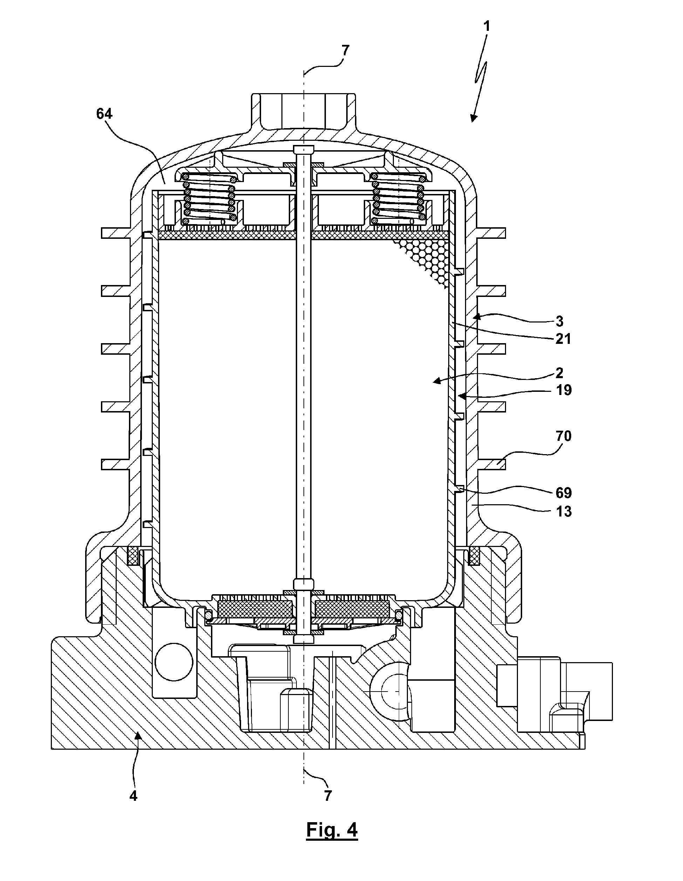

**Fig. 4** zeigt eine bis auf weiteres Fig. 3 entsprechende Ausgestaltung. Hier verfügt das Gehäuse 19 der Lufttrocknungskartusche 2 im Bereich der äußeren Mantelfläche der Seitenwandung 21 über eine spiralförmig um die Längsachse 7-7 umlaufende Rippe 69, welche möglichst eng an die innere Mantelfläche der Seitenwandung 13 des Deckelelements 3 mit seiner Stirnseite anliegt. Hiermit ist eine Art Zyklon gebildet, welcher bewirkt, dass die Druckluft von der Einlasskammer 5 nicht mit rein vertikaler Bewegung parallel zur Längsachse 7-7 zu der Restöffnung 64 gelangen kann, sondern spiralförmig um die Mantelfläche der Seitenwandung 21 geführt wird. Dies hat zur Folge, dass sich ein längerer Weg der Druckluft ergibt, über welchen eine Kühlung der Druckluft erfolgen kann, beispielsweise im Bereich der Innenfläche des Deckelelements 3, welches in diesem Fall ebenfalls mit Kühlrippen 70 ausgestattet sein kann. Dies kann eine Kondensation von in der Druckluft enthaltener Feuchtigkeit bereits in dem Zwischenraum 63 zur Folge haben, so dass nur noch eine Restfeuchtigkeit zu dem Trocknungsmittel 35 gelangt, wodurch die Lastzyklen vor einer Regeneration verlängert werden können und/oder die Lebensdauer der Lufttrocknungskartusche 2 ohne Wechsel des Trocknungsmittels 35 verlängert werden kann.

Entsprechend einer abgewandelten, hier nicht näher im Detail dargestellten Ausführungsform kann die Abstützung des Abstützelements 44 über ein an der Bodenwand 20 gehaltenes Zugelement 47 auch Einsatz finden für eine geschlossene Lufttrocknungskartusche DE 699 08 918 T2, wobei abweichend zu DE 699 08 918 T2 dann aber nicht die Federn 38a, 38b an der Deckenwandung des Gehäuses der Lufttrocknungskartusche abgestützt sind. Auf diese Weise kann auch für eine Lufttrocknungskartusche gemäß DE 699 08 918 T2 eine Beanspruchung der Seitenwandung des Gehäuses der Lufttrocknungskartusche 2 mit der Vorspannkraft zumindest reduziert werden.

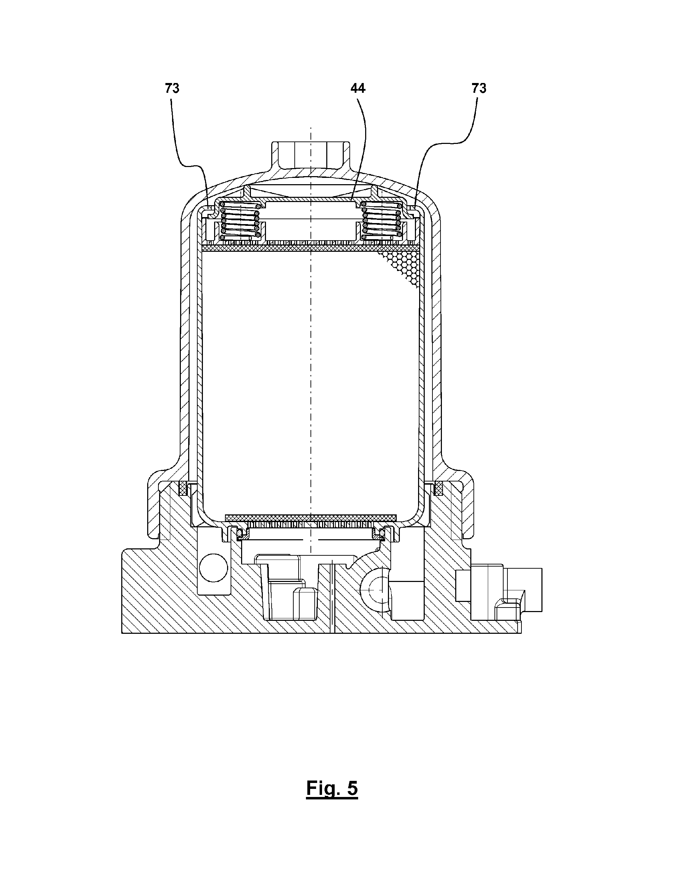

Andererseits ist auch möglich, dass die Nutzung der Federn 38a, 38b zum Verspannen der Lufttrocknungskartusche 2 in dem Gehäuse des Lufttrockners 1 erfolgt, ohne dass sich durch die Lufttrocknungskartusche 2 erstreckende Zugelemente 47 genutzt sind. In diesem Fall können Endbereiche der Seitenwandung 21 so nach innen umgebogen sein (oder mit ergänzenden Halteelementen ausgestattet sein), dass die Innenseite der Umbiegung oder ein Halteelement zur Anlage kommt an die Oberseite des Abstützelements 44, so dass dieses entsprechend der Begrenzung 55 in einer oberen Endlage gehalten ist. Mit dem Einbau der Lufttrocknungskartusche 2 in das Gehäuse des Lufttrockners 1 löst sich dann das Abstützelement 44 von den Endbereichen 73, vgl. Fig. 5, womit dann die Lufttrocknungskartusche 2 verspannt wird.

Es versteht sich, dass abweichend zu den dargestellten Ausführungsformen beliebige Modifikationen der Druckluftströme, eine Aufteilung von Druckluftströmen auf unterschiedliche Strömungspfade, unterschiedliche Vorabscheidungen, der Einsatz beliebiger Filter, Zyklone und Labyrinthabscheidungen, der Einsatz von Koaleszenz- oder Aktivkohlefiltern u. ä. erfolgen kann, wie dies grundsätzlich aus dem Stand der Technik bekannt ist, ohne dass hierdurch der erfindungsgemäße Rahmen verlassen wird.

Vorzugsweise besteht das Gehäuse 19 der Lufttrocknungskartusche 2 aus Kunststoff. Hingegen kann das Deckelelement 3 als Aluminium-Gussteil ausgebildet sein.

### BEZUGSZEICHENLISTE

- 1: Lufttrockner
- 2: Lufttrocknungskartusche
- 3: Deckelelement
- 4: Sockelelement
- 5: Einlasskammer
- 6: Auslasskammer
- 7: Längsachse
- 8: Bund
- 9: Außengewinde
- 10: Nut
- 11: Dichtelement
- 12: Deckenwandung
- 13: Seitenwandung
- 14: Erweiterung
- 15: Stirnfläche
- 16: Verbindungsbereich
- 17: Innengewinde
- 18: Innenraum
- 19: Gehäuse
- 20: Bodenwandung
- 21: Seitenwandung
- 22: Durchlass
- 23: Bohrung
- 24: Innenraum
- 25: Rippe
- 26: Führungsfläche
- 27: Führungsfläche
- 28: Stirnfläche
- 29: Absatz
- 30: Dichtelement
- 31: Ringbund
- 32: Teller
- 33: Ringbund
- 34: Flies
- 35: Trocknungsmittel
- 36: Öffnung
- 37: Vorspannelement
- 38: Feder
- 39: Flies
- 40: Vorspannplatte
- 41: Durchlass
- 42: Bohrung
- 43: Außenbereich
- 44: Abstützelement
- 45: Abstützplatte
- 46: Abstützbund
- 47: Zugelement
- 48: Draht
- 49: Führungsbuchse
- 50: Führungsbuchse
- 51: Führungsbund
- 52: Führungsbuchse
- 53: Begrenzung
- 54: Scheibe
- 55: Begrenzung
- 56: Scheibe
- 57: Spiel
- 58: Anlagebereich
- 59: Gegen-Anlagebereich
- 60: Innensechskant
- 61: Ringbund
- 62: Ringbund
- 63: Zwischenraum
- 64: Restöffnung
- 65: Rohr
- 66: Filter
- 67: Filter
- 68: Verdickung
- 69: Rippe
- 70: Kühlrippe
- 71: Kugel
- 72: Rippe
- 73: Endbereich

## Patentansprüche

1. Lufttrocknungskartusche (2) für einen Lufttrockner (1) eines Nutzfahrzeugs mit einem Abstützelement (44), an dem über mindestens eine Feder (38) ein Vorspannelement (37) für ein Trocknungsmittel (35) abgestützt ist, **dadurch gekennzeichnet, dass** das Abstützelement (44) gegenüber einem Gehäuse (19) der Lufttrocknungskartusche (2) bewegbar und frei von außen zugänglich ist.

2. Lufttrocknungskartusche (2) für einen Lufttrockner (1) eines Nutzfahrzeugs mit einem Abstützelement (44), an dem über mindestens eine Feder (38) ein Vorspannelement (37) für ein Trocknungsmittel (35) abgestützt ist, insbesondere Lufttrocknungskartusche (2) nach Anspruch 1, **dadurch gekennzeichnet, dass** das Vorspannelement (37) in einem Deckenbereich der Lufttrocknungskartusche (2) angeordnet ist und das Abstützelement (44) über ein sich durch die Lufttrocknungskartusche (2) hindurch erstreckendes Zugelement (47) an einer Bodenwandung (20) der Lufttrocknungskartusche (2) abgestützt ist.

3. Lufttrocknungskartusche (2) nach Anspruch 1 oder 2, **dadurch gekennzeichnet, dass**
a) ein Gehäuse (19) der Lufttrocknungskartusche (2) eine Öffnung (36) zu einem Innenraum (24) ausbildet, in dem das Trocknungsmittel (35) angeordnet ist, und
b) das Abstützelement (44) die Öffnung (36) des Gehäuses (19) zumindest teilweise verschließt.

4. Lufttrocknungskartusche (2) nach einem der vorhergehenden Ansprüche, **dadurch gekennzeichnet, dass** das Abstützelement (44) unter Veränderung einer Beaufschlagung der Feder (38) bewegbar ist, wobei die Bewegung des Abstützelements (44) von dem Trocknungsmittel (35) weg durch eine mit dem Gehäuse (19) verbundene oder hiervon gebildete Begrenzung (53, 55) begrenzt ist.

5. Lufttrocknungskartusche (2) nach Anspruch 4, **dadurch gekennzeichnet, dass** die Begrenzung (55) derart angeordnet und ausgebildet ist, dass, wenn sich das Abstützelement (44) an der durch die Begrenzung (55) vorgegebenen Position befindet, eine von dem Abstützelement (44) vorgegebene Dimension der Lufttrocknungskartusche (2) größer ist als die **entsprechende** Dimension eines Gehäuses (Sockelelement 4, Deckelelement 3) eines Lufttrockners (1), für welchen die Lufttrocknungskartusche (2) bestimmt ist.

6. Lufttrocknungskartusche (2) nach Anspruch 4 oder 5, **dadurch gekennzeichnet, dass** die Begrenzung (55) mit einem die Luftrockungskartusche (2) durchsetzenden Zugelement (47) gebildet ist oder über ein die Luftrockungskartusche (2) durchsetzendes Zugelement (47) abgestützt ist.

7. Lufttrocknungskartusche (2) nach Anspruch 6, **dadurch gekennzeichnet, dass** eine Begrenzung (53, 55) des Zugelements (47) durch einen Umformvorgang des Zugelements (47) hergestellt ist.

8. Lufttrocknungskartusche (2) nach Anspruch 6 oder 7, **dadurch gekennzeichnet, dass** das Zugelement (47) ein Zuganker, ein Zugstab, ein Draht, ein Stab (48), eine Schraube oder ein Rohr (65) ist.

9. Lufttrocknungskartusche (2) nach einem der vorhergehenden Ansprüche, **dadurch gekennzeichnet, dass** das Abstützelement (44) mit einer Abstützplatte (45) ausgebildet ist.

10. Lufttrocknungskartusche (2) nach einem der vorhergehenden Ansprüche, **dadurch gekennzeichnet, dass** zwischen Abstützelement (44) und Vorspannelement (37) mehrere Federn (38a, 38b) zwischengeordnet sind.

11. Lufttrocknungskartusche (2) nach einem der vorhergehenden Ansprüche, **dadurch gekennzeichnet, dass** das Abstützelement (44) einen außenliegenden Anlagebereich (58) für ein Gehäuse des Lufttrockners (2) aufweist.

12. Lufttrocknungskartusche (2) nach einem der vorhergehenden Ansprüche, **dadurch gekennzeichnet, dass** das Gehäuse (19) der Lufttrocknungskartusche (2) teilweise oder vollständig aus Kunststoff besteht.

13. Lufttrockner (1) für eine Druckluftanlage eines Nutzfahrzeugs mit einer Lufttrocknungskartusche (2) nach einem der vorhergehenden Ansprüche, wobei
a) das Abstützelement (44) mit einem Anlagebereich (58) an einem Gegen-Anlagebereich (59) eines Gehäuseteils, insbesondere eines Deckelelements (3), des Lufttrockners (1) anliegt und
b) die Feder (38), die zwischen das Vorspannelement (37) und das Abstützelement (44) zwischengeschaltet ist,
ba) sowohl die Verspannung der Lufttrocknungskartusche (2) zwischen dem Gehäuseteil, insbesondere dem Deckelelement (3), und einem weiteren Gehäuseteil, insbesondere dem Sockelelement (4), des Lufttrockner (1) zur Fixierung der Lufttrocknungskartusche (2) in dem Lufttrockner (1)
bb) als auch die Vorspannung des Trocknungsmittels (35)
beeinflusst.
